# EUROPEAN PATENT APPLICATION

(11) **EP 3 289 927 A1**
(43) Date of publication of application: **07.03.2018**
(21) Application number: 16187353.4
(22) Date of filing: 06.09.2016
(51) Int. Cl.: A47G 11/00, B60N 3/00

(54) **ARRANGEMENT APPLIED TO DISPOSABLE PROTECTIVE COVER FOR AIRCRAFT TRAY TABLES**

(71) Applicant: Silva, Alexandre Palhares de Oliveira, Presidente Prudente (BR)
(72) Inventor: Silva, Alexandre Palhares de Oliveira, Presidente Prudente (BR)
(74) Representative: Müller Schupfner & Partner Patent- und Rechtsanwaltspartnerschaft mbB

(57) **Abstract**

Consists of a disposable protective cover (1) preferably made of TNT, of easy placement and removal of tray tables (2) of aircrafts, which takes the shape of said tray table, remaining attached to said tray table thanks to the pressure provided by an elastic perimeter (3) on the entire border of said protective cover (1).

## Description

### Introduction

This patent of invention refers to a new **ARRANGEMENT APPLIED TO DISPOSABLE PROTECTIVE COVER FOR AIRCRAFT TRAY TABLES,** especially a protective cover preferably made of TNT with elastic in the edges that take the shape of an aircraft tray table, aiming to create an aseptic barrier between tray table and objects disposed on the table, as well as serve as a protection so that products do not get onto said tray table, facilitating subsequent cleaning of the table.

### Application field

The application field of this innovation is the commercial aviation, more specifically airliners, where meals and/or snacks are served.

### State of the art

According to field research, airports and aircrafts have more germs than residences and contrary to what one might imagine places with vents or locks and buttons of discharges of toilets are not the parts of the aircraft with most germs index, but the tray tables. This is explained by the fact that the aircraft should remain as little as possible in the ground, and during this time, people responsible for cleaning the aircraft prioritize the asepsis of toilets, passing over the cleanliness of the tray tables, which is usually done at the end of the journey of a flying day, opposite to the toilets, which are cleaned every landing and departure of the airplane. In a study conducted within the aircrafts, it was found that there are about 285 cfu/ sq.in of germs in the ventilation outlet, while they are found about 70 and 265 cfu/ sq.in in the locks and discharge buttons respectively. The tray table presents a total of incredible 2,155 cfu/ sq.in of germs, which clearly justifies the solution proposed here.

The current prior art anticipates some patent documents that deal with all kinds of protection, as Brazilian patent application MU 8502234-9 entitled "*Disposição Construtiva Aplicada em Capa para Revestimento de Cabeça de Encosto de Cabeça de Bancos de Veiculos Automotores com Propaganda",* which is a main body of thermoplastic material, composed by a housing provided with a stow cavity involving the back of a car seat; said cover is laterally closed by seams and provided with sheath in its peripheral lower edges, wherein the back section includes a protective plastic film attached by sewing, below which there is an adhesive film, promoting the fixing of a plate provided with a print, while the front section is free from any print.

The prior art above is a protection for car seats, which prevents waste and sweat of the scalp to reach the equipment at the same time acts as a console for advertising, being totally different from this invention.

Brazilian patent application PI 0602369-0 entitled *"Capa Protetora para Encosto de Cabeça de Poltronas com Veiculação de Mídia*", primarily refers to the same inventive concept of MU 8502234-9 aforementioned, but applied to passenger vehicles (taxis or buses).

Brazilian patent application MU 8902277-7 entitled *"Embalagem com Lacre para Lanches que se transforma em Bandeja*", it is a package made of a cut and crease system without any glue or adhesive with closure by means of seals that prevent the violation after placement of the product, becoming with its opening and detaching in a tray made with creases and folds for immediate use.

Some airlines have used this ruse to circumvent the dirt of the original tray tables in the aircrafts, but this method is not practical, besides being expensive in cost and assembly time.

American patent application US 20110013856 anticipates a box that turns in a strip to be worn in the tray table of an aircraft, having different activities for distraction of children during trips, with space to draw, write, read, among others.

Although dressing the table, the objective of this priority is to entertain the children and not to isolate the germs during the snacks and/or meals, therefore not opposing to this new invention.

### Object of the invention

It is an object of this innovation to propose a disposable protective cover for aircraft tray tables easy to install during meal time, which can be carried out by flight attendants or passengers, as well as its removal together with the pickup of the remaining snack and/or meal.

### Summary of the invention

**ARRANGEMENT APPLIED TO DISPOSABLE PROTECTIVE COVER FOR AIRCRAFT TRAY TABLES,** object of this patent of invention, consists of bagging a cover preferably made of TNT on an aircraft's tray table; said cover takes the shape of said tray table, and also has an elastic perimeter that enables said cover to be fastened to said tray table after placement.

### Advantages of the invention

In short, this innovation presents as more preponderant advantages:
✔ Solution to the attack of germs that proliferate on the table toward the snack and/or meal;
✔ Avoid that snack and/or meal portions drop directly on the table;
✔ Acquisition cost is minimal;
✔ Excellent cost-benefit ratio;
✔ Of simple handling.

### Description of the figures

In sequence, the figures are presented to better explain this invention, of an illustrative and non-limitative way:

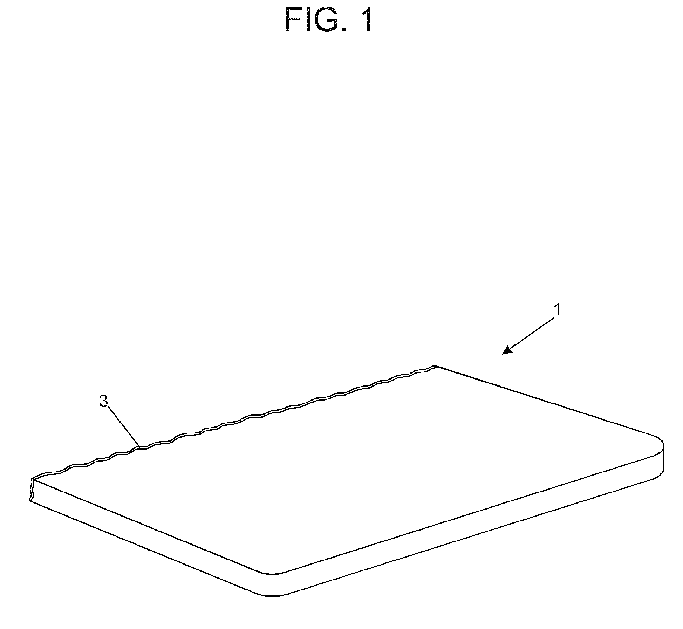

Figure 1: Perspective view of the arrangement applied to disposable protective cover for aircraft tray tables.

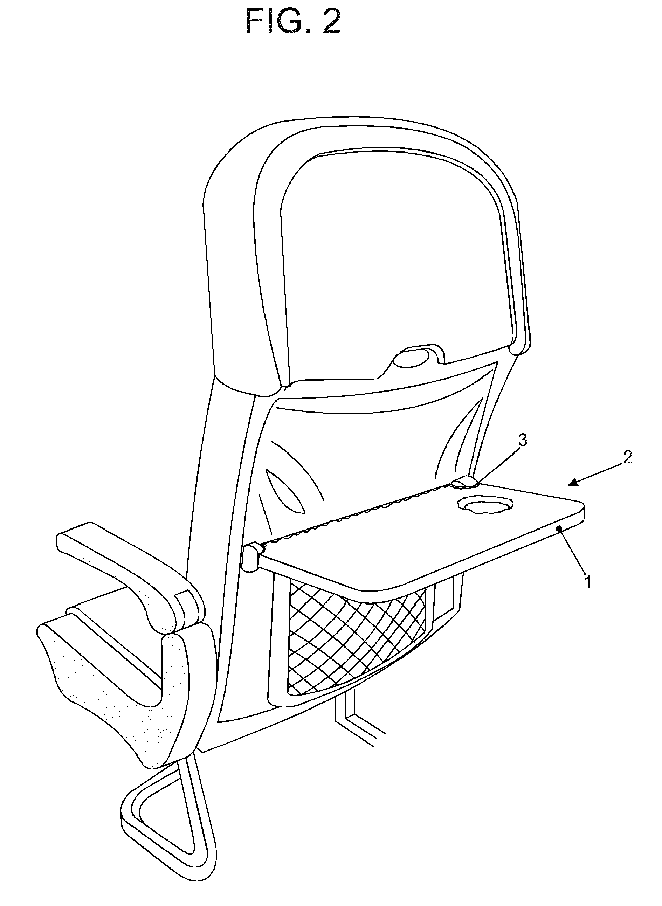

Figure 2: Perspective view of arrangement applied to disposable protective cover for aircraft tray tables, showing use.

### Detailed description of the invention

**ARRANGEMENT APPLIED TO DISPOSABLE PROTECTIVE COVER FOR AIRCRAFT TRAY TABLES,** object of this invention, consists of a disposable protective cover (1) preferably made of TNT, of easy placement and removal of tray tables (2) of aircrafts, which takes the shape of said tray table, remaining attached to said tray table thanks to the pressure provided by an elastic perimeter (3) on the entire border of said protective cover (1).

More particularly, the invention is a protective cover (1) for lining tray tables (2) where snacks and/or meals are placed in the aircrafts. Tray tables (2) are plat-bands used as supports to the passengers when they eat their snacks and/or meals; they are fixed to the backs of the seats when not in use and tilted when in use; said tray tables (2) are generally of rectangular surface shape with rounded corners for safety reasons. The fact is that this large surface, as already widely commented, due to the reduced frequency of cleaning between flights, acts as accumulation and/or concentration of germs, bacteria, and microorganisms harmful to health in an inappropriate location, i.e. a place designed for consumption of food; therefore the concept proposed here is a protective cover (1) preferably made of TNT (nonwoven) in an appropriate shape to dress a tray table (2); said protective cover (1) has a contour of a like-cap clothing, whose perimeter is followed by an elastic (3), which acts as a fixing element of the protective cover (1) when placed on said tray table (2), moment when the elastic (3) is tensioned, keeping the protective cover (1) fixed to the tray table (2), but not permanently, being placed and removed easily after use. The protective cover (1) can be disposed after use together with the waste from the meal/snack served in the aircraft.

There are different strategies for use of this invention, starting from placing the protective covers (1) as soon as the aircraft lands, at the time of quick cleaning in between flights, or supply the protector together with snacks/meals to the passengers themselves choose placing it or not, leaving each company to choose the strategy that best sees fit.

## Claims

1. ARRANGEMENT APPLIED TO DISPOSABLE PROTECTIVE COVER FOR AIRCRAFT TRAY TABLES, consists of a protective cover (1) preferably made of TNT (nonwoven), wherein has a shape suitable for lining a tray table (2) of an aircraft, whose perimeter is followed by an elastic (3) which acts as a fixing element of the protective cover (1) when placed on said tray table (2), moment when the elastic (3) is tensioned, keeping the protective cover (1) fixed to the tray table (2), but not permanently, being placed and removed easily after use; said protective cover (1) can be disposed after use.
